Europäisches Patentamt

European Patent Office

Office européen des brevets

(19)

(11) Veröffentlichungsnummer: **0 252 412 B1**

(12) **EUROPÄISCHE PATENTSCHRIFT**

(45) Veröffentlichungstag der Patentschrift: **22.05.91**

(51) Int. Cl.⁵: **A61C 5/10**

(21) Anmeldenummer: **87109376.1**

(22) Anmeldetag: **30.06.87**

(54) **Dentalhülse und ihre Verwendung.**

(30) Priorität: **07.07.86 CH 2739/86**

(43) Veröffentlichungstag der Anmeldung:
**13.01.88 Patentblatt 88/02**

(45) Bekanntmachung des Hinweises auf die
Patenterteilung:
**22.05.91 Patentblatt 91/21**

(84) Benannte Vertragsstaaten:
**AT BE CH DE ES FR GB GR IT LI LU NL SE**

(56) Entgegenhaltungen:
**EP-A- 0 104 320**
**EP-A- 0 188 249**
**DE-A- 3 523 000**
**DE-C- 3 511 487**

(73) Patentinhaber: **Koller, Werner**
**Unterdorfstrasse 22**
**CH-4415 Lausen(CH)**

(72) Erfinder: **Koller, Werner**
**Unterdorfstrasse 22**
**CH-4415 Lausen(CH)**

(74) Vertreter: **Frossard, Michel, Dr. et al**
**A. Braun, Braun, Héritier, Eschmann AG, Pa-**
**tentanwälte Holbeinstrasse 36-38**
**CH-4051 Basel(CH)**

Rank Xerox (UK) Business Services

**Beschreibung**

Es waren schon verschiedene Arten Dentalkappen bekannt, welche als Träger oder Basis einer später darauf anzubringenden Porzellanverblendung verwendet werden und somit einen wichtigeren Bauteil in der fertigen Dentalkrone darstellen. Das Kronengerüst wurde bisher überwiegend in Wachs modelliert und in Aufbrennlegierung gegossen.

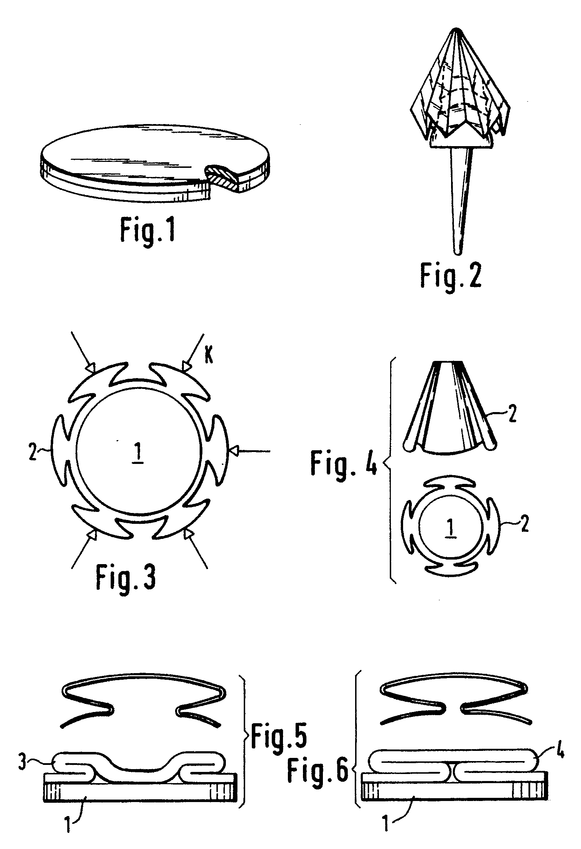

Nun besteht ein neues Verfahren gemäss der europäischen Patentschrift Nr. 104 320 darin, aus einer Metallfolie rundförmige Scheiben (Fig. 1) zu schneiden, die Scheiben als sternförmige Schirmchen (Fig. 2) vorzufertigen und später mit Hilfe spezieller Werkzeuge dem Zahnstumpf manuell anzupassen.

Ferner wird in der deutschen Patentschrift Nr. 35 11 847 ein kegelförmiges Hütchen aus Metallfolie vorgeschlagen, bei welchem mehrere im Querschnitt trapezförmige Ausfaltungen über den Umfang verteilt angeordnet sind; nach Anpassung an den Zahnstumpf oder Modell weist das Hütchen mindestens im Randbereich, d.h. im späteren Cervicalbereich, eine dreilagige Mantelfläche auf.

Die manuelle Umformung aber ist zeitraubend, erheblichen Schwankungen durch die individuelle Handhabung des Zahntechnikers unterworfen, verursacht ungleichförmige Faltenbildung, die zu einem hohen Verlust an mechanischer Festigkeit führt. Infolge zufälliger und kantiger Faltenbildung kommt es zu Spannungen in der Keramikmasse. Allgemein ist die Herstellungstoleranz durch verschiedene Zahntechniker sehr gross; werkstoffkundliche Untersuchungen zeigten, dass die umständliche Faltung von Hand aus dem Schirmchen oder Hütchen heraus zu ungleichförmigen Innenflächen führt, die keine planen Diffusionsflächen mehr bilden. Die anschliessende Diffusionsverschmelzung der Reingoldschicht zu einer kompakten, geschlossenen Kappe gelingt häufig unvollständig. Randverformung, Passungenauigkeit und Keramikabplatzen sind die Folgen.

Gemäss der deutschen Offenlegungsschrift Nr. 35 23 000 wird eine Metallfolie verwendet, die sich von selbst dem Zahnstumpf anlegt, sobald eine Kraft K von aussen auf sie einwirkt (Fig. 3). Unter Einwirkung der erwähnten Kraft legt sich die Metallfolie der Zahnstumpfoberfläche 1 an, wobei lineare vertikale Faltfugen 2 in gleichen Abständen entstehen (Fig. 4). Die Anzahl der schleifenförmigen Falten und die Zwischenräume werden so bemessen, dass beispielsweise ein doppeltes Faltband 3 (Fig. 5) oder eine bandartige Vertikalstrebe 4 (Fig. 6) entsteht.

Das dadurch gebildete Zahnkronengerüst besteht demnach je nach Faltmuster und Stelle im Muster aus einer oder mehreren Metallschichten.

Wie die oben besprochenen Kappen gemäss EP 104 320 und DE 35 11 847 weist es an seinem unteren Rand bzw. am Zahnfleischrand, also eben dort, wo es dicht abschliessen soll, eine infolge der Falzen ungleichmässige Dicke auf, was sich insbesondere im cervical-labialen Bereich störend auswirken und zu Verformungen in der späteren Dentalkrone und damit zur Unbeständigkeit überhaupt bzw. zu einer partiellen Passungenauigkeit führen kann.

Es wurde nun eine neue Dentalhülse gefunden, welche als Träger der Porzellanverblendung eine Verbundkeramikkrone verwendet werden soll, die oben geschilderten Nachteile jedoch nicht aufweist.

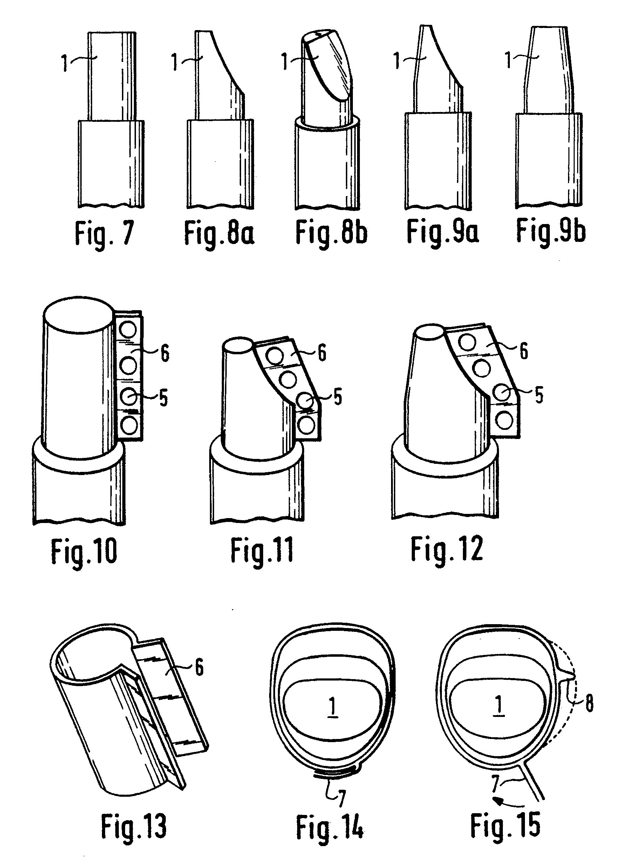

Im folgenden werden die beiliegenden Zeichnungen kurz erläutert. Es beziehen sich Fig. 1 bis 6 auf den in der Einleitung erörterten Stand der Technik, Fig. 7 bis 23 auf Ausführungsformen der Erfindung, wobei:

Fig. 1 eine aus zwei Metallschichten bestehende rundförmige Scheibe darstellt;

Fig. 2 eine als sternförmiges Schirmchen vorgefertigte rundförmige Scheibe darstellt;

Fig. 3 einen Schnitt durch das Schirmchen von Fig. 2, nachdem eine Kraft K von aussen darauf eingewirkt hat, darstellt;

Fig. 4 in seitlicher Ansicht und entsprechendem Schnitt das Schirmchen von Fig. 3 mit den entstandenen vertikalen Faltfugen darstellt;

Fig. 5 und 6 einen Schnitt durch die entstandenen schleifenförmigen Falten darstellen;

Fig. 7 eine erste übliche Form des Zahnstumpfes darstellt,

Fig. 8a und 8b eine seitliche bzw. perspektivische Ansicht einer zweiten üblichen Form des Zahnstumpfes darstellen,

Fig. 9a und 9b eine seitliche bzw. vordere Ansicht einer dritten üblichen Form des Zahnstumpfes darstellen,

Fig. 10 eine erste Ausführungsform der Erfindung, welche dem Zahnstumpf von Fig. 7 entspricht, darstellt,

Fig. 11 eine zweite Ausführungsform der Erfindung, welche dem Zahnstumpf von Fig. 8a/8b entspricht, darstellt,

Fig. 12 eine dritte Ausführungsform der Erfindung, welche dem Zahnstumpf von Fig. 9a/9b entspricht, darstellt,

Fig. 13 eine perspektivische Ansicht der Folie, bevor sie durch punktuelle Schweissung zu einer Hülse geschlossen wird, darstellt,

Fig. 14 einen Schnitt durch die auf dem Zahnstumpf montierte Hülse darstellt,

Fig. 15 einen Schnitt durch eine weitere Ausführungsform der auf dem Zahnstumpf montierten Hülse darstellt,

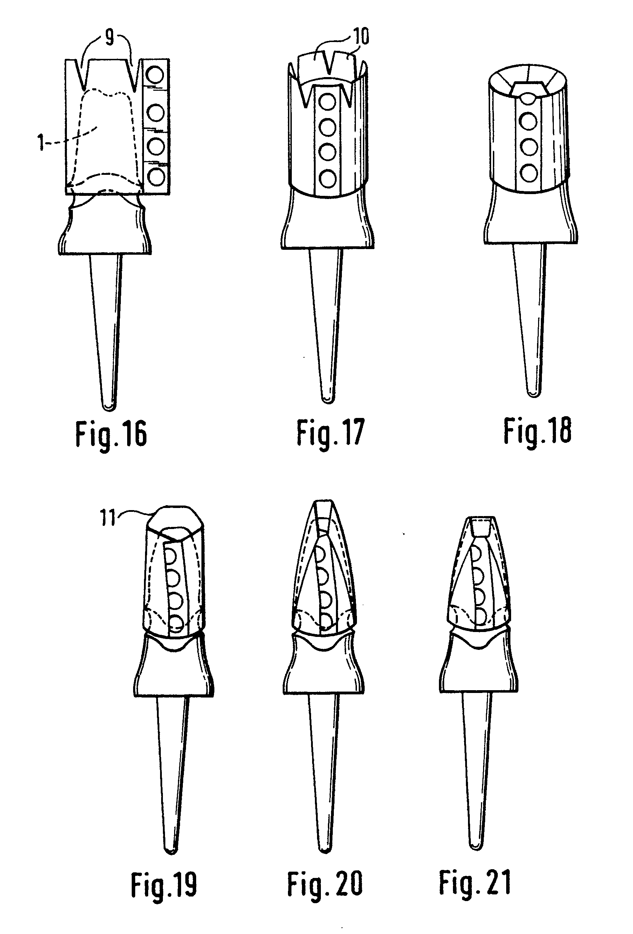

Fig. 16 eine seitliche Ansicht der Verwendung der Hülse zur Herstellung einer Verbundkeramikkrone darstellt,

Fig. 17 bis 21 eine perspektivische Ansicht weiterer entsprechender Ausführungsformen darstellen,

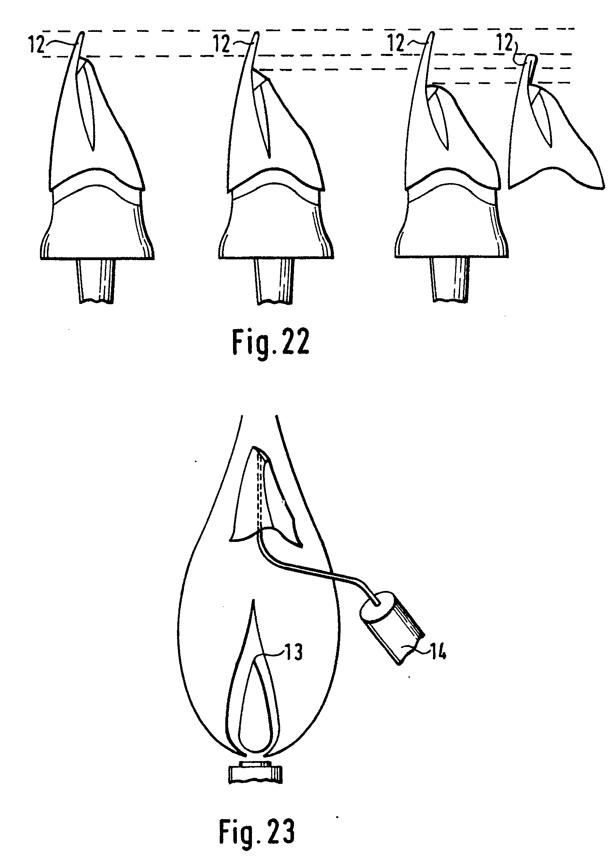

Fig. 22 vier verschiedene, aufeinanderfolgende Stufen der Verwendung der Hülse und

Fig. 23 das Erhitzen der Hülse zur Diffusion der Goldschichten darstellt.

Die neue Dentalhülse lässt sich ohne weiteres auf die üblichen anatomischen Formen des Zahnstumpfes (Fig. 7, 8a, 8b, 9a, 9b) anwenden.

Die erfindungsgemässe Hülse besteht aus einer Verbundfolie von zylindrischer Form (Fig. 10) oder von unten zylindrischer/oben-lingual konischer Form (Fig. 11) oder von lingual und seitlich lonischer Form (Fig. 12). Materiell besteht sie aus zwei, drei oder mehreren Schichten, von welchen die innere Schicht, bei drei oder mehreren Schichten gegebenenfalls auch die äussere Schicht, aus Feingold oder aus einer Goldlegierung besteht, während die andere bzw. anderen Schichten aus Platin, Palladium, Silber, Indium oder Iridium oder aus einer Legierung oder Legierungen von mindestens zwei dieser Metalle oder mindestens eines dieser Metalle mit Gold oder aus einer leicht reduzierten Aufbrennlegierung besteht. Die oben erwähnte Form der Hülse wird durch punktuelle Schweissstellen 5 an der inneren Feingold-oder Goldlegierungsschicht der beiden Schmalseiten der Verbundfolie gewährleistet, während Höhe und Umfang der Hülse nach jenen des zu umschliessenden Zahnstumpfes oder Modelles gewählt sind.

Allerdings war es bis vor kurzem praktisch nicht möglich, Goldfolien oder goldverkleidete bzw. goldlegierungsverkleidete Metallfolien durch Punktschweissung aneinander zu binden. Bei Verwendung der bisher üblichen Schweissgeräte mit Kupferelektroden bildete sich bei zu hoher Spannung ein Loch, bei zu niedriger Spannung hingegen wurde keine Schweissung erreicht. Da bei der neuen Dentalhülse die punktuellen Schweissstellen der Edelmetallverbundfolie eine konstruktive Bedingung darstellen und die Technik hierzu erst noch entwickelt werden musste, konnte die vorliegende Erfindung aus den Dentalkappen der eingangs erwähnten Patentschriften nicht abgeleitet werden.

Im folgenden wird die Erfindung ausführlich beschrieben.

Die Verbundfolie weist mit Vorteil eine Gesamtdikke von etwa 0,06 mm auf. Es handelt sich dabei um eine gewalzte Sandwichfolie, bei welcher mindestens eine Schicht (je nach Herstellerfirma, im allgemeinen Gold- und Silberscheideanstalten) meistens aus einer Legierung von zwei oder mehreren der Metalle Platin, Palladium, Silber, Indium, Iridium und Gold oder aus einer leicht reduzierten Aufbrennlegierung besteht. Unter einer leicht reduzierten Aufbrennlegierung versteht man eine Legierung mit einem Anteil an Feingold von mindestens 50 %. Allerdings liegen meistens, in Form eines Laminats, mehr als nur eine solche Schicht vor; in diesem Fall können die einzelnen Schichten aus verschiedenen der bereits erwähnten Metalle oder aus verschiedenen Legierungen derselben bestehen. Eine oder beide Oberflächen der erwähnten Schicht oder des erwähnten Laminats sind mit einer Feingold- oder Goldlegierungsschicht überzogen; es können auch Goldgranulatschichten sein.

Beispielsweise kann die Verbundfolie im Schnitt folgende Zusammensetzung aufweisen :

1. Schicht :  Feingold
2. Schicht :  Legierung aus Au, Pt, Pd und Ag, z.B. Au 80, Pt 10, Pd 5 und Ag 5 %
3. Schicht :  Legierung aus Pd, Ag und Au oder Pd, Ag und Ir, z.B. Pd 55, Ag 5 und Au 35 % oder Pd 80, Ag 12 und Ir 8 %
4. Schicht :  wie 2. Schicht
5. Schicht :  Feingold

Zur Herstellung der Dentalhülse wird die Folie zuerst in rechteckige Schnitteile geschnitten, deren Breite und Länge der Höhe bzw. dem Umfang der Hülse bzw. des zu umschliessenden Zahnstumpfes oder des Modelles plus Schweissstellensegment 6 entsprechen. Hierauf werden die Schnitteile auf speziell angepassten Werkzeugen zu Zylindern verformt, wobei die Ränder der Schmalseiten nicht überlappen, sondern nach aussen hin gegeneinander aufliegen (Fig. 13), so dass die innere Goldschicht oder Goldlegierungsschicht der einen Schmalseite und dieselbe Schicht der anderen Schmalseite aufeinander liegen. Die derart ausgerichteten Ränder der Schmalseiten werden dann durch punktuelle Schweissung entlang der Höhe des Zylinders aneinander verbunden (Fig. 10).

Die Bedeutung der punktuellen Schweissstellen ist bereits hervorgehoben worden. Sie erfolgt mit Vorteil mit erst dafür konstruierten Punktschweissgeräten mit Wolfram- (Tungsten-)elektroden. Eine Punktschweissung durch Anwendung von Laserstrahlen ist allerdings auch möglich. Im allgemeinen werden die Schweissstellen so angelegt, dass sie auf der lingualen Seite 7 des Zahnstumpfes (Fig. 14) zu liegen kommen.

Zur Herstellung von Dentalhülsen der zweiten zuvor erwähnten Form, d.h. der unten zylindrischen/oben-lingual konischen Form (Fig. 11), verfährt man so, dass man die punktuelle Schweissung nur im unteren Teil des Zylinders durchführt, den Zylinder oberhalb des verschweissten Teils gegen die linguale Seite des Zahnstumpfes oder des Modells anpresst, so dass der obere Teil des Zylinders eine konische Form erhält, und die ausstehenden Ränder an dem oberen, nicht verschweissten Teil durch punktuelle Schweissung entlang der Neigung des Konus aneinander verbindet.

Will man nun Dentalhülsen der dritten zuvor erwähnten Form, d.h. der lingual und seitlich konischen Form (Fig. 12), herstellen, dann soll man ausserdem durch Einziehen und Zusammenpressen des oberen Teils an einem oder an beiden Enden der Querachse einen oder zwei ausstehende Falze 8 bilden (Fig. 15) und den bzw. die ausstehenden Falze zur Erleichterung der Diffusionsverschmelzung bei der Herstellung der Verbundkeramikkrone abschneiden.

Erhalten werden also vorgefertigte Dentalhülsen, welche nach Wahl eine der drei oben erwähnten und in den Figuren 10, 11 und 12 veranschaulichten Formen aufweisen, deren Höhe und Umfang der jeweiligen Zahnstumpfgrösse entsprechen und die in Form eines Sortimentes aus Modellen verschiedener Ausmasse dargeboten werden können. Die Hülsen sollen den cervicalen Stumpfteil (Präparationsrandgrenze) satt umfassen, in einer Ueberlänge zum tiefsten, cervicalen Präparationspunkt von 1,5 bis 2,0 mm.

Jedes Modell des Sortimentes stellt also einen normierten Ring dar, dessen Umfang jeweils dem cervicalen Teil des Zahnstumpfes entsprechen soll. Der Umfang des cervicalen Teils kann mit einem Dentimeter gemessen werden; anhand des gefundenen Masses wird dann unter den verschiedenen Modellen das passende ausgewählt.

Erfindungsgemäss werden diese Dentalhülsen zur Herstellung von Verbundkeramikkronen verwendet, indem man eine Feinanpassung der Dentalhülse an den Zahnstumpfausmassen vornimmt und dabei den oberen Rand der Hülse zusammenbiegt, so dass die obere Oeffnung geschlossen wird. Zu diesem Zweck werden Einschnitte 9 in den oberen Rand der zylindrischen Form vorgenommen (Fig. 16 und 17) und die verbleibenden Zacken 10 gegen das Zentrum der Hülse hin gebogen (Fig. 18). Im Falle der konischen Form werden die Seiten 11 der Hülse oben einander entgegengebogen (Fig. 19 und 20) und die verbleibende Oeffnung nach bekannter Technik geschlossen (Fig. 21). Wenn der auf der Hülse vorgesehene Porzellanmentel im Verhältnis zur Höhe des Zahnstumpfes für eine befriedigende Statik der Zahnkrone zu dick wäre, können die oberen Ränder zu einem Incisalfalz 12 zusammengezogen werden (Fig. 22). Gegebenenfalls werden auch die mesial-distalen Seiten der Hülse zu einem Falz (Fig. 15) oder zu Falzen zusammengezogen. Wenn von der Dentalhülse nur die innere Schicht aus Feingold oder einer Goldlegierung besteht, wird ausserdem eine entsprechende äussere Schicht, vorteilhafterweise mittels einer entsprechenden Paste, auf die Hülse aufgetragen. Die derart angepasste Dentalhülse wird dann zur Diffusionsverschmelzung der Feingoldschichten bzw. der Goldlegierungsschichten auf eine Temperatur von etwa 1030 bis etwa 1080° C, vorzugsweise in einer Gasflamme 13 (Fig. 23) oder in einem Ofen, erhitzt. Sodann wird ein Haftvermittler oder ein Bindemittel für die Porzellanverblendung auf die Dentalhülse aufgetragen und aufgebrannt und die Keramikmasse auf die Dentalhülse aufgetragen und aufgebrannt.

Vor der Verwendung soll als Voraussetzung ein Beschleifen des Modellstumpfes mit einer Einnutung genau unterhalb der Präparationsgrenze vorgenommen werden, zwecks anschliessender zylindrischer Ausfüllung mit einem speziellen Ausblock-Kunststoff (z.B. Uniblock oder Zappit). Ebenfalls sollen allfällige Einbuchtungen im Zahnstumpf ausgefüllt werden. Diese Vorbereitungsphase ist dem Zahntechniker wohlbekannt.

Im einzelnen geht man vorzugsweise gemäss den folgenden Arbeitsstufen vor.

a) Adaptieren der Hülse unter Berücksichtigung einer Ueberlänge von 2,0 - 3,0 mm zur incisalen Spitze 12 des Modellstumpfes (Fig. 22).

b) Sollte eine zusätzliche Adaptierung im cervicalen Umfangbereich der Hülse nötig sein, kann an der Hülse ein individueller Spannfalz 8 (Fig. 15) auf der mesialen oder distalen Seite des Modellstumpfes erfolgen, d.h. eine zu gross im Umfang gewählte Hülse kann auf diese Weise genau und satt an die Präparationsgrenze angepasst werden.

c) Genaues Zurückschneiden des cervicalen Randschlussteils mit der Mikroschere auf einen Restteil ca. 1,0 mm unterhalb des Präparationsrandes.

d) Unter Verwendung einer handelsüblichen Hammerpresse (Swager) mit einer plastischen Unterziehfolie von ca. 0,015 - 0,020 mm erfolgt die Adaptation durch 2 bis 3 mittlere Hammerschläge.

e) Vertikale Diffusonsverschmelzung im Bunsenbrenner mit speziellem Drahthalter 14 gemäss Fig. 23 oder im Ofen.

f) Feinanpassung nach bereits bekanntem Verfahren.

g) Säurebehandlung oder Sandstrahlen mit Aluminiumoxid feinster Korngrösse, Entfettung.

h) Aufbrennen eines handelsüblichen Haftvermittlers (Bonder, Blendgold, Deckgold), Feinfilmbrand (Washbrand), Hauptkernbrand, Dentinbrand usw.; das Aufbrennen wird wie bei einer Gusskappe durchgeführt.

Die Vorteile, die sich aus der Erfindung ergeben, können folgendermassen zusammengefasst werden:

- Zeitlich äusserst rationelle Herstellung einer Edelmetallträgerhülse für spätere Verbundkeramikkrone, unter Umgehung der üblichen Gusskappe.

- Eine einzige, gleichmässige Schicht im labial-cervicalen Bereich und dadurch ein besserer cervicaler Randschluss und ein kosmetisch einwandfreies Aussehen.
- Möglichkeit, den oberen, incisalen Teil der Hülse zu einem Incisalfalz 12 (Fig. 22) zusammenzupressen und dadurch gemäss der Empfehlung der Porzellanhersteller eine statische Unterstützung der Porzellanverblendung zu erreichen, wenn der Stumpf im Verhältnis zur Höhe der Zahnkrone zu kurz ist.
- Oekonomischer Edelmetall-Verbrauch durch präzis vorgeschnittene Schnitteile für die jeweilige Stumpfgrösse.
- Schnitteile, die in den drei erwähnten Grundformen der jeweiligen Stumpfform angepasst sind.

## Ansprüche

1. Dentalhülse, als Träger der Porzellanverblendung einer Verbundkeramikkrone zu verwenden, welche Hülse zylindrische Form oder unten zylindrische/oben-lingual konische Form oder lingual und seitlich konische Form aufweist und aus einer Verbundfolie von zwei, drei oder mehreren Schichten besteht, von welchen die innere Schicht, bei drei oder mehreren Schichten gegebenenfalls auch die äussere Schicht, aus Feingold oder aus einer Goldlegierung besteht, während die andere bzw. anderen Schichten aus Platin, Palladium, Silber, Indium oder Iridium oder aus einer Legierung oder Legierungen von mindestens zwei dieser Metalle oder mindestens eines dieser Metalle mit Gold oder aus einer leicht reduzierten Aufbrennlegierung bestehen, und wobei die oben erwähnte Form durch punktuelle Schweissstellen (5) an der inneren Feingold- oder Goldlegierungsschicht der Ränder (6) der beiden nach aussen hin gegeneinander aufliegenden Schmalseiten der Verbundfolie gewährleistet ist, während Höhe und Umfang der Hülse nach jenen des zu umschliessenden Zahnstumpfes oder Modelles gewählt sind.

2. Verfahren zur Herstellung der Dentalhülse nach Anspruch 1, dadurch gekennzeichnet, dass man besagte Verbundfolie in rechteckige Schnitteile schneidet, deren Breite und Länge den vorher bestimmten Werten von Höhe und Umfang des Zahnstumpfes oder Modells, für welche die Dentalhülse zu verwenden ist, plus Schweissstellensegment (6) entsprechen, die Schnitteile zu Zylindern verformt, wobei die Ränder der Schmalseiten nicht überlappen, sondern nach aussen hin gegeneinander aufliegen, und die derart ausgerichteten Ränder durch punktuelles Zusammenschweissen (5) der inneren Goldschicht oder Goldlegierungsschicht an den beiden Schmalseiten der Schnitteile, entlang der Höhe des Zylinders, aneinander verbindet.

3. Verfahren nach Anspruch 2, dadurch gekennzeichnet, dass man die punktuelle Schweissung (5) nur im unteren Teil des Zylinders durchführt, den Zylinder oberhalb des verschweissten Teils gegen die linguale Seite (7) des Zahnstumpfs oder des Modells anpresst, so dass der obere Teil des Zylinders eine konische Form erhält, und die ausstehenden Ränder (6) an dem oberen, nicht verschweissten Teil durch punktuelle Schweissung entlang der Neigung des Konus aneinander verbindet.

4. Verfahren nach Anspruch 3, dadurch gekennzeichnet, dass man ausserdem durch Einziehen und Zusammenpressen des oberen Teils an einem oder an beiden Enden der Querachse einen oder zwei ausstehende Falze (8) bildet und den bzw. die ausstehenden Falze abschneidet.

5. Verfahren zur Herstellung einer Verbundkeramikkrone unter Verwendung einer Dentalhülse nach Anspruch 1, dadurch gekennzeichnet, dass man eine Feinanpassung der Dentalhülse an den Zahnstumpfausmassen vornimmt, wobei die oberen Ränder der Hülse zusammengebogen werden und dadurch die obere Oeffnung geschlossen wird, im Fall einer Dentalhülse, deren äussere Schicht nicht aus Feingold oder einer Goldlegierung besteht, eine solche äussere Schicht aufträgt, die derart angepasste Dentalhülse zur Diffusionsverschmelzung der Feingoldschichten bzw. der Goldlegierungsschichten auf eine Temperatur von ca. 1030 bis 1080° C erhitzt, einen Haftvermittler oder ein Bindemittel für die Porzellanverblendung auf die Dentalhülse aufträgt und aufbrennt und die Keramikmasse auf die Dentalhülse aufträgt und aufbrennt.

6. Verfahren nach Anspruch 5, dadurch gekennzeichnet, dass das Erhitzen auf ca. 1030 bis 1080° C in einer Gasflamme oder in einem Ofen durchgeführt wird.

7. Verfahren nach Anspruch 5, dadurch gekennzeichnet, dass im Fall einer Dentalhülse, deren äussere Schicht nicht aus Feingold oder einer Goldlegierung besteht, die besagte äussere Schicht mittels einer Goldpaste oder Goldlegierungspaste aufgetragen wird.

## Claims

1. Dental sleeve to be used as a carrier for the porcelain veneer of a composite ceramic crown, this sleeve having a cylindrical form or a form cylindrical at the bottom and lingually conical at the top or a lingually and laterally conical form and consisting of a composite foil which comprises two, three or more layers the inner layer, and optionally also the outer layer where three or more layers are concerned, consisting of fine gold or a gold alloy, whilst the other layer or layers consist of platinum, palladium, silver, indium or iridium or of an alloy or alloys of at least two of these metals or at least one of these metals and gold or of a slightly reduced fusing alloy, and the above-mentioned form being guaranteed by means of spot welds (5) on the inner fine-gold or gold-alloy layer of the edges (6) of the two narrow sides of the composite foil resting against one another towards the outside, whilst the height and circumference of the sleeve are selected in conformity with those of the tooth stump or model to be enclosed.

2. Process for producing the dental sleeve according to Claim 1, characterized in that the said composite foil is cut into rectangular pieces, the width and length of which correspond to the predetermined values of the height and circumference of the tooth stump or model for which the dental sleeve is to be used, plus the weld segment (6), the cut pieces are shaped into cylinders, the edges of the narrow sides not overlapping, but resting against one another towards the outside, and the edges aligned in this way are joined to one another by means of the spot-welding (5) together of the inner gold layer or gold-alloy layer on the two narrow sides of the cut pieces over the height of the cylinder.

3. Process according to Claim 2, characterized in that spot welding (5) is carried out in the lower part of the cyclinder only, the cylinder is pressed, above the welded part, against the lingual side (7) of the tooth stump or model, so that the upper part of the cylinder acquires a conical form, and the protruding edges (6) in the upper unwelded part are joined together by means of spot welding along the slant of the cone.

4. Process according to Claim 3, characterized in that, in addition, one or two protruding folds (8) are formed at one end or at both ends of the transverse axis by drawing in the upper part and pressing it together, and the protruding fold or protruding folds are cut off.

5. Process for producing a composite ceramic crown by use of the dental sleeve according to Claim 1, characterized in that accurate matching of the dental sleeve to the dimensions of the tooth stump is carried out, the upper edges of the sleeve being bent towards each other and the upper orifice thereby being closed, where a dental sleeve the outer layer of which does not consist of fine gold or a gold alloy is concerned such an outer layer is applied, the dental sleeve matched in this way is heated to a temperature of approximately 1030 to 1080° C for the diffusion of the fine-gold layers or gold-alloy layers by fusion, an adhesion promoter or a binder for the porcelain veneer is applied to the dental sleeve and fused on, and the ceramic mass is coated on the dental sleeve and fused to it.

6. Process according to Claim 5, characterized in that heating to approximately 1030 to 1080° C is carried out in a gas flame or in an oven.

7. Process according to Claim 5, characterized in that, where a dental sleeve the outer layer of which does not consist of fine gold or a gold alloy is concerned, the said outer layer is applied by means of a gold paste or gold-alloy paste.

## Revendications

1. Capuchon dentaire, destiné à être utilisé comme support du revêtement de porcelaine d'une couronne combinée en céramique, capuchon de forme cylindrique ou cylindrique en bas et conique en haut du côté lingual ou conique du côté lingual et latéral et consistant en une feuille composée de deux, trois ou plusieurs couches, desquelles la couche intérieure et, lorsqu'il y a trois ou plusieurs couches, également la couche extérieure est/sont en or fin ou en un alliage d'or tandis que l'autre ou les autres couches sont en platine, palladium, argent, indium ou iridium ou en un alliage ou alliages d'au moins deux de ces métaux ou d'au moins l'un de ces métaux avec l'or ou un alliage de revêtement faiblement réduit et pour lequel la forme mentionnée ci-dessus est assurée par des points de soudure (5) sur la couche intérieure d'or fin ou d'alliage d'or des bords (6) des deux côtés étroits appuyés l'un contre l'autre et dirigés vers l'extérieur de la feuille composée, tandis que la hauteur et la circonférence du capuchon sont choisies d'après celles du chicot dentaire ou du modèle à enclore.

2. Procédé de préparation du capuchon dentaire selon la revendication 1, caractérisé en ce qu'on coupe ladite feuille composée en segments rectangulaires dont la largeur et la longueur correspondent aux dimensions, déterminées auparavant, de la hauteur et de la circonférence du chicot dentaire ou du modèle pour lesquels le capuchon dentaire doit être utilisé plus la zône des points de soudure (6), on forme les segments en cylindres, de façon à ce que les bords des côtés étroits ne se recouvrent pas mais soient appuyés l'un contre l'autre et dirigés vers l'extérieur, et l'on fixe l'un à l'autre les bords ainsi disposés par soudure ponctuelle (5) de la couche intérieure d'or ou d'alliage d'or des deux côtés étroits des segments selon la hauteur du cylindre.

3. Procédé selon la revendication 2, caractérisé en ce qu'on effectue la soudure ponctuelle (5) seulement à la partie inférieure du cylindre, on presse le cylindre, audessus de la partie soudée, contre la partie linguale (7) du chicot dentaire ou du modèle de façon telle que la partie supérieure du cylindre prenne une forme conique et l'on fixe l'un à l'autre par soudure ponctuelle les bords saillants (6) à la partie supérieure, non soudée, selon l'inclinaison du cône.

4. Procédé selon la revendication 3, caractérisé en ce que, en outre, on forme un ou deux plis saillants (8) en rentrant et comprimant la partie supérieure à l'une des ou aux deux extrémités de l'axe transversal et l'on coupe le ou les plis saillants.

5. Procédé de préparation d'une couronne combinée en céramique par utilisation d'un capuchon dentaire selon la revendication 1, caractérisé en ce que l'on procède à une adaptation exacte du capuchon dentaire aux dimensions du chicot dentaire, par laquelle les bords supérieurs du fourreau sont repliés les uns vers les autres et l'orifice supérieur est ainsi fermé, lorsque la couche extérieure du capuchon dentaire ne consiste pas en or fin ou en un alliage d'or on dépose une telle couche extérieure, on chauffe à une température d'environ 1030 à 1080 °C le capuchon dentaire ainsi adapté afin de diffuser par fusion les couches d'or fin ou d'alliage d'or, on dépose sur le capuchon dentaire un adhésif ou un liant pour le revêtement de porcelaine et l'on dépose et cuit la masse céramique sur le capuchon dentaire.

6. Procédé selon la revendication 5, caractérisé en ce qu'on effectue le chauffage à 1030 - 1080 °C dans une flamme de gaz ou dans un four.

7. Procédé selon la revendication 5, caractérisé en ce que lorsque la couche extérieure ne consiste pas en or fin ou en un alliage d'or, on dépose ladite couche extérieure au moyen d'une pâte d'or ou d'une pâte d'alliage d'or.

Fig.1

Fig.2

Fig.3

Fig.4

Fig.5

Fig.6

Fig. 7    Fig.8a    Fig.8b    Fig.9a    Fig.9b

Fig.10    Fig.11    Fig.12

Fig.13    Fig.14    Fig.15

**Fig.16**

**Fig.17**

**Fig.18**

**Fig.19**

**Fig.20**

**Fig.21**

Fig. 22

Fig. 23